Europäisches Patentamt

(19) European Patent Office

Office européen des brevets

(11) Publication number: **0 099 688**

A2

(12) **EUROPEAN PATENT APPLICATION**

(21) Application number: **83303864.9**

(22) Date of filing: **01.07.83**

(51) Int. Cl.³: **B 60 R 1/02**

(30) Priority: **17.07.82 GB 8220775**

(43) Date of publication of application:
**01.02.84 Bulletin 84/5**

(84) Designated Contracting States:
**DE FR GB IT**

(71) Applicant: **BRITAX (WINGARD) LIMITED**
**Chandler Road**
**Chichester Sussex, PO19 2UG(GB)**

(72) Inventor: **Glue, William James**
**12 Marden Avenue**
**Chichester West Sussex(GB)**

(74) Representative: **Hollinghurst, Antony**
**Britax Central Services 40 Granby Avenue**
**Garretts Green Birmingham, B33 OSJ(GB)**

(54) **Rear view mirror.**

(57) A rear view mirror for a motor vehicle comprises a reflective member (10) located in a housing (12). Resilient coupling means (18, 20) connects one edge of the reflective member (10) to an adjacent wall of the housing (12) and urges the reflective member (10) in a direction towards the opposite wall of the housing (12) while allowing angular movement thereof about two orthoganol axes lying in planes parallel to that of the reflective member. A pair of spaced detent members (28) on the opposite edge of the reflective member (10) are urged by the resilient coupling means (18, 20) into engagement with complementary formations (32) on an adjacent wall of the housing (12). The detent members (28) can be displaced out of engagement with their complementary formations, by means of a control member (34), so as to permit movement of the reflective member (10) about said resilient coupling means (18, 20).

FIG.2.

- 1 -

"Rear View Mirror"

This invention relates to rear view mirrors for motor vehicles and has particular application to rear view mirrors of the type in which the mirror is adjusted by adjusting the orientation of the reflective member within the housing. The invention is applicable both to interior and exterior mirrors.

According to the invention, a rear view mirror for a motor vehicle comprises a housing, a reflective member located in the housing and moveable relative thereto, resilient coupling means connecting one edge of the reflective member to an adjacent wall of the housing and arranged to urge the reflective member in a direction towards the opposite wall of the housing while allowing angular movement thereof about two orthoganol axes lying in planes parallel to that of the reflective member, detent means on the opposite edge of the reflective member and arranged to be urged by said resilient coupling means into engagement with complementary formations on an adjacent wall of the housing, and a control member projecting through a slot in the housing and coupled to the reflective member whereby said detent means can be displaced out of engagement with the complementary formations so as to permit movement of the reflective member about said resilient coupling means.

An embodiment of the invention will now be described, by way of example, with reference to the accompanying drawings, in which:

Figure 1 is a front elevation of a rear view mirror in

0099688

- 2 -

·accordance with the invention.

Figure 2 is an illustrative sectional view taken on the line 2 - 2 in Figure 1, and

Figure 3 is a sectional view taken on the line 3 - 3 of Figure 1.

Referring to the drawings, a rear view mirror has a reflective member 10 mounted in a housing 12 which has attachment points 14 and 16 whereby it may be mounted on a motor vehicle. A peg 18 projects inwardly from one wall of the housing 12 and has a compression spring 20 mounted thereon. The reflective member carries a bracket 22 adjacent to one edge thereof. The bracket 22 has a hole 24 which is a loose fit on the peg 20 so as to permit angular movement about axes perpendicular to the longitudinal axis of the peg 18.

Adjacent to its opposite edge, the reflective member 10 is attached to a second bracket 26 which carries two spaced detent members 28 and 30. The detent members 28 and 30 are urged into engagement with a set of ridges and grooves 32 formed on the inner wall of the housing 12 opposite to the peg 18, the ridges and grooves running parallel to the open front of the housing 12. A rod 34, rigidly attached to the bracket 26, projects through a slot 36 in the housing 12 which is located centrally in the zone bearing the ridges and grooves 32.

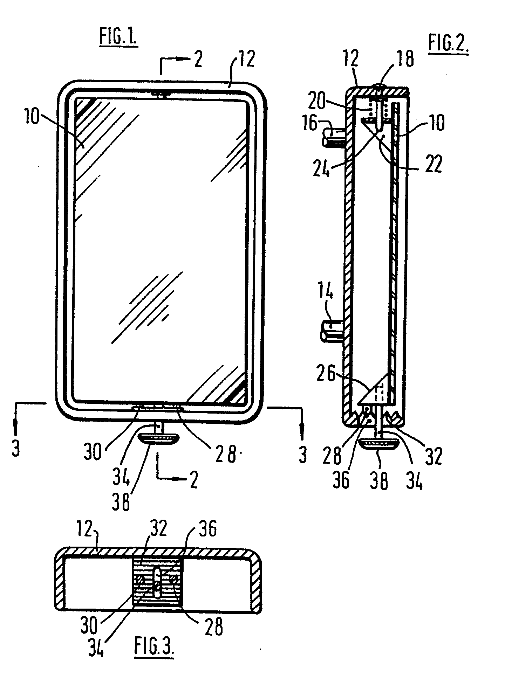

In use, the spring 20 normally urges the two detent members 28 and 30 into engagement with the ridges and grooves 32 to hold the reflective member 10 in position. When it is desired to alter the orientation of the reflective member 10, a knob 38 on the free end of the rod 34 is pressed upwardly, as viewed in Figures 1 and 2 so as to disengage the detents 28 and 30 from the ridges and grooves 32. The knob 38 can then be rotated to alter the orientation of the reflective member in the horizontal direction and slid along the slot 36 to alter such orientation in the vertical direction. When the required orientation is achieved, the knob is allowed to move downwards so as to re-engage the detent members 28 and 30 in the ridges and grooves 32. It will be appreciated that the detent member 28 may then not be in engagement with the same groove as

that engaged by the detent member 30.

When the mirror is used as an exterior mirror, it is preferably mounted with the slot 36 at the bottom so as to prevent ingress of rainwater. When it is used as an interior mirror, the slot 36 may be on any side of the mirror as required.

CLAIMS

1.      A rear view mirror for a motor vehicle comprising a
housing (12) and a reflective member (10) located in the housing (12)
and moveable relative thereto, characterised by resilient coupling
means (18, 20) connecting one edge of the reflective member (10)
to an adjacent wall of the housing and arranged to urge the
reflective member (10) in a direction towards the opposite wall of
the housing while allowing angular movement thereof about two
orthoganol axes lying in planes parallel to that of the reflective
member (10), detent means (28, 30) on the opposite edge of the
reflective member (10) and arranged to be urged by said resilient
coupling means (18, 20) into engagement with complementary
formations (32) on an adjacent wall of the housing, and a control
member projecting through a slot in the housing (12) and coupled
to the reflective member (10) whereby said detent means (28, 30)
can be displaced out of engagement with the complementary
formations (32) so as to permit movement of the reflective member
about said resilient coupling means (18, 20).

2.      A mirror according to claim 1, characterised in that the
detent means comprises a pair of spaced detent members (28 and 30)
each of which is engageable with a separate part of the complementary
formations (32).

3.      A mirror according to claim 1 or 2, characterised in that
the resilient coupling means comprises a peg (18) secured to one of
the housing (12) and the reflective member (10) and engageable in a
hole (24) in the other of said housing (12) and reflective member
(10), together with a compression spring (20) surrounding the
peg (18).

FIG.1.

FIG.2.

FIG.3.